# EUROPÄISCHE PATENTSCHRIFT

(11) **EP 1 966 045 B1**
(45) Veröffentlichungstag und Bekanntmachung des Hinweises auf die Patenterteilung: **25.08.2010**
(21) Anmeldenummer: 06829420.6
(22) Anmeldetag: 08.12.2006
(51) Int. Cl.: B64C 27/615, B64C 13/50

(54) **ROTORBLATT FÜR EIN DREHFLÜGELFLUGZEUG**
ROTOR BLADE FOR A ROTARY WING AIRCRAFT
PALE DE ROTOR POUR GIRAVION

(30) Priorität: 21.12.2005 DE 102005061751
(43) Veröffentlichungstag der Anmeldung: 10.09.2008
(73) Patentinhaber: EUROCOPTER DEUTSCHLAND GmbH, 86609 Donauwörth (DE)
(72) Erfinder: GROHMANN, Boris, 82024 Taufkirchen (DE); MAUCHER, Christoph, 81371 München (DE); ALTMIKUS, Andree, 85635 Höhenkirchen-Siegertsbrunn (DE); MANGELSDORF, Stephan, 81379 München (DE)
(74) Vertreter: GPI & Associés
(86) Internationale Anmeldenummer: PCT/EP2006/011812
(87) Internationale Veröffentlichungsnummer: WO 2007/079855

(56) Entgegenhaltungen:
- EP-A- 0 814 019
- EP-A2- 0 262 637
- WO-A-2004/069651
- WO-A1-01/31715
- US-A- 5 662 294
- US-A1- 2001 006 207
- US-A1- 2002 043 590
- US-A1- 2004 183 408
- GIURGIUTIU V ET AL: "Incrementally adjustable rotor-blade tracking tab using SMA composites" AIAA/ASME/ASCE/AHS/ASC STRUCTURES, STRUCTURAL DYNAMICS AND MATERIALS CONFERENCE AND EXHIBIT AND AIAA/ASME/AHS ADAPTIVE STRUCTURES FORUM, Nr. 2, 7. März 1997 (1997-03-07), Seiten 1456-1466, XP002075057
- STEVEN R HALL ET AL: "Development of a piezoelectric servoflap for helicopter rotor control" SMART MATERIALS AND STRUCTURES, IOP PUBLISHING LTD., BRISTOL, GB, Bd. 5, Nr. 1, 1. Februar 1996 (1996-02-01), Seiten 26-34, XP020071789 ISSN: 0964-1726

## Beschreibung

### TECHNISCHES GEBIET

Die vorliegende Erfindung betrifft ein Rotorblatt mit einer beweglichen Rotorblatt-Klappe, insbesondere für ein Drehflügelflugzeug, wie zum Beispiel einen Hubschrauber, sowie ein Drehflügelflugzeug mit einem solchen Rotorblatt.

### Stand der Technik

An Rotorblättern eines Drehflügelflugzeuges entstehen im Betrieb Luftwirbel. Diese erzeugen Lärm und Vibrationen, welche beispielsweise in der Kabine des Drehflügelflugzeuges spürbar sind und somit den Komfort der Passagiere beeinträchtigen. Außerdem sind solche Vibrationen im Hinblick auf die Lebensdauer und die Wartung nachteilig, da sie zu einer Materialermüdung der Bauteile und fortgesetzter Relativbewegung der Bauteile mit damit einhergehender Abnutzung führen können.

Asymmetrische Strömungsbedingungen und komplexe aero-mechanische und aero-elastische Phänomene, der Zusammenstoß eines Rotorblattes mit Blattwirbeln eines jeweils vorauseilenden Rotorblattes, und die daraus resultierenden, auf das Rotorblatt wirkenden Kräfte sind die Ursache dieser Geräusche und Vibrationen. Um unterschiedlichen Flugzuständen und variierenden Anstellwinkeln soweit wie möglich Rechnung zu tragen, werden Rotorblätter verwendet, bei welchen sich die Gestalt des Rotorblattes im Hinterkantengebiet verändern lässt. Durch die gezielte Anpassung der Rotorblattgestalt im Hinterkantengebiet können Geräusche und Vibrationen reduziert werden und gleichzeitig die Flugleistung und Flugkurve verbessert werden.

Im Stand der Technik sind dazu Rotorblatt-Klappen an der Rotorblatthinterkante bekannt, welche beispielsweise mit Hilfe eines Gelenklagers beweglich an einem Rotorblattprofilkörper befestigt sind. Aus der DE 101 16 479 A1 ist ein solches Rotorblatt bekannt, wobei die Rotorblatt-Klappe über einen Piezoaktuator ansteuerbar ist, der in einer Profiltiefenrichtung von der Klappe beanstandet in einem vorderen Profilbereich des Rotorblattprofilkörpers angeordnet ist. Der Piezoaktuator generiert Stellkräfte und überträgt diese über streifen- oder stangenförmige Zugelemente auf die Rotorblatt-Klappe.

Bei dieser Art von Rotorblättern lässt bereits nach relativ kurzer Betriebsdauer die Wirksamkeit der Rotorblatt-Klappe nach. Daher schlägt die DE 103 34 267 A1 ein Rotorblatt mit elastisch beweglicher Rotorblatt-Klappe vor, bei welchem in die starren Deckhäute des Flügelprofils bzw. unmittelbar unter den in sich starren Deckhäuten bzw. auf den starren Deckhäuten piezoelektrische Aktuatoren befestigt sind, so dass wahlweise einer der beiden piezoetektrischen Aktuatoren auf der oberseitigen Deckhaut oder unterseitigen Deckhaut des Flügelprofils betätigt werden kann und somit zu einer Verschiebung der jeweiligen Deckhaut relativ zu der anderen Deckhaut führt, was die obere Deckhaut relativ zur unteren Deckhaut verkürzt bzw. verlängert. Aufgrund der relativen Verkürzung einer Deckhaut zur anderen wird die an den Deckhäuten angebrachte starre Rotorblatt-Klappe ausgelenkt und nach oben oder unten bewegt.

In der JP 8-216-997 ist ein Rotorblatt für einen Hubschrauber offenbart, bei welchem die Deckhaut in der Umgebung der Hinterkante des Rotorblattes sich zumindest in Richtung der Profilsehne mit Hilfe eines piezoelektrischen Elements ausdehnen und zusammenziehen kann.

Eine ähnliche Anordnung ist auch in der DE 103 04 530 A1 offenbart, wobei die piezoelektrischen Aktuatoren entweder in das Profil integriert sind, für das keine Klappe vorgesehen ist, oder alternativ ausschließlich in der Klappe vorgesehen sind. Bei den in der Klappe vorgesehenen Piezoaktuatoren wird die Profilklappe mittels der piezoelektrischen Aktuatoren verformt.

Das Dokument: GIURGIUTIU V ET AL: "Incrementally adjustable rotor-blade tracking tab using SMA composites" AIAA/ASMEIASCE/AHSIASC STRUCTURES, STRUCTURAL DYNAMICS AND MATERIALS CONFERENCE AND EXHIBIT AND AIAA/ASME/AHS ADAPTIVE STRUCTURES FORUM, Nr. 2, 7. März 1997 (1997-03-07), Seiten 1456-1466, zeigt Aktuatoren mit aus Formgedächtnismetalllegierung bestehenden Drähten, die auf nicht näher beschriebener Weise mit einer Rotorblatt-Hinterkante verbunden sind, in einer zukünftigen Variante darin integriert werden sollen, und dazu dienen Klappen zu steuern.

### DARSTELLUNG DER ERFINDUNG

Davon ausgehend ist es Aufgabe der Erfindung, ein Rotorblatt mit einer Rotorblatt-Klappe vorzusehen, das mechanisch und kinematisch einfach ist, über günstige aerodynamische Eigenschaften verfügt, und eine kontinuierlich übergehende Verformung in Profilsehnen- und Spannweitenrichtung ermöglicht.

Diese Aufgabe wird mit einem Rotorblatt mit den Merkmalen des Anspruchs 1 gelöst. Ein Drehflügelflugzeug, das ein solches Rotorblatt verwendet, ist in Anspruch 30 definiert. Bevorzugte Ausführungsformen sind durch die abhängigen Ansprüche angegeben.

Der Erfindung liegt der Gedanke zugrunde, die Aktivierung bzw. Betätigung der Rotorblatt-Klappe, d.h. die Erzeugung eines Klappenausschlags, mittels eines in sich reversibel verbiegbaren Biegeaktuators, vorzugsweise eines piezoelektrischen Aktuators, der Bestandteil des Biegeaktuators ist, zu bewirken. Durch diesen Biegeaktuator, der selbst einen wesentlichen Bestandteil der Rotorblatt-Klappe bildet, wird die Rotorblatt-Klappe zur Erzeugung des Klappenausschlags reversibel verformt. Der Biegeaktuator ist vorzugsweise flächig, wobei er aus einem oder mehreren platten- und/oder streifenförmigen Elementen gebildet sein kann. Flächig bedeutet, dass der Biegeaktuator in einer Raumrichtung, vorzugsweise einer zur Oberfläche des Profils im Wesentlichen senkrechten Richtung, dünn gegen über den anderen Raumrichtungen ist. Bei flächigen Biegeaktuatoren ist die Ausrichtung vorzugsweise derart, dass die Hauptflächen sich im Wesentlichen entlang der Profilflächen des Rotorblattprofils erstrecken. Die Hauptflächen des Biegeaktuators können unter variierendem oder gleich bleibendem Abstand zur Profilaußenseite liegen. Wesentlich ist, dass der Biegeaktuator eine definierte Verformung bzw. Verbiegung erfahren kann.

Indem zumindest ein Befestigungsbereich des Biegeaktuators in den Profil-Grundkörper des Rotorblattprofils eingebettet ist bzw. der Biegeaktuator an einem ersten Ende im Profil-Grundkörper befestigt ist, wird einerseits erreicht, dass keine zusätzlichen, mechanischen Elemente zur Befestigung einer Klappe, wie z.B. Scharniere, nötig sind. Andererseits kann eine Verformung des Klappenbereichs ebenso wie die Auslösung bzw. Betätigung der Klappenbewegung mittels desselben Biegeaktuators erfolgen, so dass die Struktur mechanisch verhältnismäßig einfach ist. Da außerdem der Biegeaktuator in der Profilstruktur verankert ist, ist eine stabile Befestigung gewährleistet. Dadurch, dass mittels des Biegeaktuators die gesamte Rotorblatt-Klappe, ggf. einschließlich einer zwischen einer Deckhaut und dem Biegeaktuator liegenden Füllschicht, verformt wird, entstehen keine abrupten Übergänge, sondern vielmehr in allen Auslenkungszuständen der Klappe eine gleichmäßige, stetige Kontur, die sowohl in Profilsehnenrichtung als auch in Spannweitenrichtung oder auch nur in einer der beiden Richtungen variieren kann, wenn unterschiedliche Bereiche des Biegeaktuators aktiviert werden.

Im Bereich des Biegeaktuators ist in der Regel keine normale Profildeckhaut, z.B. aus Faserverbundwerkstoff, die extrem steif ist und dem Profil Stabilität verleiht, vorhanden. Vielmehr ist entweder eine biegeelastische oder gummielastische Schutzhaut vorhanden, ein gummielastisches oder biegeelastisches erstes Füllmaterial auf dem Biegeaktuator angebracht, oder der Biegeaktuator liegt frei, um eine gute Verbiegbarkeit oder Verformbarkeit der Rotorblatt-Klappe zu gewährleisten. Kombinationen aus Schutzhaut und Füllmaterial sind ebenfalls möglich. Alternativ dazu ist die versteifende gewöhnliche Deckhaut, die i.d.R. aus Faserverbundwerkstoff hergestellt ist, zumindest nicht durchgängig oder in ihrer normalen Stärke auf dem verbiegbaren Rotorblatt-Klappenbereich vorhanden, um dessen Verbiegung zu gewährleisten. Zumindest eine lokale Dünnstelle, die ein sogenanntes virtuelles Gelenk bildet, muss dann in der Deckhaut vorhanden sein, oder die Deckhaut im Profilhinterkantenbereich muss insgesamt weitaus dünner als gewöhnlich ausgebildet sein, so dass sie beim Aufbringen von Kräften durch den Biegeaktuator leicht verformbar ist. Eine verformbare Stelle kann z.B. auch durch eine lokale, biegeweiche Einlage in der Deckhaut oder eine integriertes biegeweiches Material gebildet sein.

Der Klappenausschlag wird somit bogenförmig, d.h. stetig gekrümmt ohne Knicke oder Unstetigkeitsstellen. Damit wird das Erzeugen von ungünstigen Verwirbelungen und eines damit einhergehenden erhöhten Widerstands, wie es bei einer unterbrochenen Oberflächenkontur bzw. Ecken oder Knicken in der Kontur der Fall ist, weitgehend verhindert, was zu einer gleichmäßigen, nicht vibrierenden Betriebsweise und gleichmäßigen Umströmung beiträgt. Somit besitzt das Rotorblatt bei einem Klappenausschlag verbesserte aerodynamische Eigenschaften.

Nach einer bevorzugten Ausführungsform enthält der Biegeaktuator einen piezoelektrischen Aktuator, wobei dieser beispielsweise ein d33-Piezoelement, ein d31-Piezoelement oder aber ein anderes, durch Zufuhr von elektrischem Strom aktivierbares und formveränderndes Element, wie beispielsweise Piezopolymere oder Piezokeramiken in anderen Formen als Stapel, ist. Möglich ist z.B. auch ein plattenförmiger Biegeaktuator aus einer Formgedächtnis-Legierung. Außerdem wird es bevorzugt, dass der Biegeaktuator Faserverbundwerkstoffmaterial bzw. Kompositmaterial, beispielsweise in schichtartigem Aufbau von plattenförmigem Trägermaterial und einem piezoelektrischen Aktuator, enthält. Besonderes bevorzugt ist der Biegeaktuator dreischichtig mit einer Trägerschicht aus Faserverbundwerkstoffmaterial und beidseitig darauf aufgebrachten Piezoelementen aufgebaut, was eine sandwichartige Struktur ergibt. Als Trägerschicht kommt insbesondere glasfaserverstärkter Kunststoff, nach Bedarf mit anisotropen oder isotropen Eigenschaften, z.B. mit einer Matrix aus einem duromeren Harz (z.B. Epoxydharz) oder einem thermoplastischen Harz in Betracht. Wesentlich ist, dass die Trägerschicht ebenfalls reversibel verbiegbar ist und somit der definierten Auslenkung durch den aktivierten Biegeaktuator folgt. Die Trägerschicht kann z.B. als Federelement oder mit Vorspannung ausgestattet sein, so dass sie eine Rückstellkraft auf den Biegeaktuator in eine Neutrallage ausübt, wenn der Biegeaktuator nicht aktiviert ist, bzw deren Vorspannungskraft beim Aktivieren des Biegeaktuators überwunden werden muss.

Durch Anordnen von mehreren piezoelektrischen Aktuatoren, z.B. in Streifenform, auf dem Trägermaterial in Spannweitenrichtung oder in Profilsehnenrichtung bzw. in Kombination in Spannweitenrichtung und in Profilsehnenrichtung ist es möglich, eine knickfreie und spaltfreie Kontur des Profils, einschließlich des Hinterkantenbereichs, an den sich die Rotorblatt-Klappe anschließt, und einschließlich der Rotorblatt-Klappe selbst, sowohl im verformten als auch im unverformten Zustand zu erzielen und die Aktivierungs- und Formveränderungsmöglichkeiten als Rotorblatt-Klappe zu erweitern, indem diese in sich definiert in Abhängigkeit von der Aktivierung des Biegeaktuators reversibel verbogen werden kann.

Dabei können der z.B. piezoelektrische Aktuator und/oder das Trägermaterial über die Fläche variierende Dicke bzw. an die Belastungen oder zu erzeugende Kraft angepasste Aktivierungs- und Formänderungseigenschaften aufweisen, was weitere Flexibilität im Hinblick auf die Aktivierungsmöglichkeiten und die Verformung der Rotorblatt-Klappe gibt. Insbesondere kann der Aufbau des Biegeaktuators aus dem z.B. piezoelektrischen Aktuator bzw. den piezoelektrischen Aktuatoren und dem Trägermaterial derart sein, dass beispielsweise eine maximale Auslenkung der Klappe oder die aerodynamische Effektivität der Klappe bzw. des Rotorblattprofils optimiert werden. Eine solche Optimierung kann auch dadurch verstärkt werden, dass die Schichten des Biegeaktuators bzw. die ihn bildenden Elemente, wie der piezoelektrische Aktuator und das Trägermaterial, gezielt im Bezug auf die Materialeigenschaften ausgerichtet werden, wenn sie als anisotrope Materialien richtungsabhängig sind.

Bevorzugter Weise ist auf den Biegeaktuator ein flexibles Füllmaterial aufgebracht, dessen Außenseite in diesem Bereich des Rotorblattprofils dessen Außenkontur formt. Das flexible Füllmaterial kann den Biegeaktuator vollständig oder auch nur teilweise bedecken. Das flexible bzw. gummielastische Füllmaterial kann nach einer bevorzugten Ausführungsform eine flexible Schutzhaut bilden. Alternativ kann eine zusätzliche flexible, biegeelastische Schutzschicht als außenseitiger Abschluss das flexible Füllmaterial umgeben, so dass das flexible Füllmaterial zwischen dem Biegeaktuator und der Schutzhaut liegt. Die Schutzhaut kann in diesem Fall z.B. eine flexible Folie, nachträglich aufvulkanisiertes Material, ein Schutzanstrich oder dergleichen sein. Sowohl Füllmaterial als auch Schutzhaut können einseitig oder beidseitig auf dem Biegeaktuator bzw. einer Trägerschicht vorgesehen sein. Die Verwendung von Füllmaterial bietet einen besonders gleichmäßigen Übergang zwischen dem Rotorblattprofil und der Rotorblatt-Klappe im Hinblick auf die Kontur, da das Füllmaterial beliebig konturierbar ist. Insbesondere kann das Füllmaterial bis auf den Profil-Grundkörper bzw. dessen Deckschicht und/oder darunter, also zwischen Kern und Deckschicht, reichen und im Querschnitt, z.B. gabelartig oder zangenartig den Profil-Grundkörper in dessen Endbereich umfassen. Der Profil-Grundkörper kann z.B. spitz in das Füllmaterial hinein über eine frei wählbare Länge zulaufen.

Alternativ dazu bildet der Biegeaktuator ohne weiteres Füllmaterial die Klappe, wobei in diesem Fall nur der Verankerungsbereich des Biegeaktuators am oder im Profilhinterkantenbereich liegt. Im Bereich der Rotorblatt-Klappe sind dann keine weiteren flexiblen Schichten vorgesehen, außer ggf. einer biegeelastischen Schutzhaut unmittelbar angrenzend an den Biegeaktuator, oder einer Schutzhaut auf dem Trägermaterial des Biegeaktuators.

Für das flexible Füllmaterial wird bevorzugt ein Schaummaterial, ein Elastomerwerkstoff oder Silikon als homogenes, flexibles Material verwendet, das der Formänderung des Biegeaktuators folgt und somit zu einer Klappenauslenkung und Klappenformänderung führt, die der Auslenkung und Formänderung des Biegeaktuators entspricht. Alternativ kann das Füllmaterial durch ein tragwerkartiges Material, d.h. ein inhomogenes Material oder eine Struktur, gebildet sein. Solche z.B. rippenartigen Versteifungselemente erstrecken sich vorzugsweise in Profildickenrichtung, betrachtet im Querschnitt des Rotorblattprofils.

Zum Ausbilden einer Schnittstelle zwischen Profil-Grundkörper und Rotorblattklappe ist vorzugsweise eine Befestigungseinrichtung für die Rotorblatt-Klappe derart vorgesehen, dass die Rotorblatt-Klappe, beispielsweise zum Austausch oder für Wartungsarbeiten oder zur Überprüfung, gelöst werden kann. Eine solche Schnittstelle enthält sowohl eine mechanische Schnittstelle, welche sicherstellt, dass die mechanischen Eigenschaften des ursprünglichen Rotorblattes gewahrt werden, wenn das Rotorblatt und die Rotorblatt-Klappe getrennt und anschließend wieder zusammengefügt werden, als auch eine elektrische Schnittstelle mit elektrischen Anschlüssen, welche aufgrund gegenseitig zusammenpassender Elemente an zwei Bauteilen gewährleistet, dass die z.B. elektrische Kontaktierung, die vorzugsweise über das Innere des Profilkerns erfolgt, problemlos wiederherstellbar ist. Da die Schnittstelle bei angebrachter Klappe nicht zur Umgebung freigelegt ist, ist sie, ebenso wie der Biegeaktuator, während des Betriebes gegenüber Umgebungseinflüssen, wie Verschmutzung, geschützt. Statt eine Schnittstelle mit einer Möglichkeit zum Lösen des Biegeaktuators vom Profil-Grundkörper vorzusehen, kann der Biegeaktuator auch unlösbar am Profil befestigt sein.

Die Befestigungseinrichtung kann eine Anschlussprofil-Struktur aufweisen, in die, z. B. mittels einer Einstecköffnung, der Biegeaktuator einsetzbar ist. Alternativ kann ein z. B. gegabelter Anschlussbereich des Biegeaktuators auf einen Befestigungsvorsprung aufsteckbar sein. Die Anschlussprofil-Struktur ist z. B. durch Einkleben, Ankleben, Anschrauben, Annieten oder unmittelbares Einlaminieren mit dem Profilkern bzw. dem Profil-Grundkörper verbindbar. Die Befestigungseinrichtung bzw. insbesondere ein Befestigungsvorsprung oder eine Einstecköffnung einer Anschlussprofil-Struktur erstreckt sich vorzugsweise zur Profilhinterkante hin.

Beispielsweise kann sie durch ein im Wesentlichen U-förmiges Profil, das sich zur Hinterkante des Profils öffnet und in den Profil-Grundkörper eingebettet ist, gebildet werden. Das U-Profil ist vorzugsweise aus einem verhältnismäßig festem Material, wie z.B. einem Faserverbundwerkstoff, hergestellt. Die Aufnahmestruktur für den Biegeaktuator wird beispielsweise durch zwei weitere zur Hinterkante des Profils gewölbte und zur Profilnase offene, im Wesentlichen U-förmige Profilelemente gebildet, wobei zwischen den zwei weiteren Profilelementen die Anschlussprofil-Struktur für den Biegeaktuator in Form eines kanalartigen Schlitzes gebildet ist. Die Profilelemente sind jeweils mit den starren Deckhäuten des Profils verbindbar. Zwischen den zwei U-förmigen, zur Hinterkante bauchigen Profilen der Aufnahmestruktur kann der Biegeaktuator eingebracht werden und form- und/oder kraftschlüssig befestigt werden. Diese Struktur stellt sicher, das Scherkräfte zwischen der oberen und der unteren Hülle übertragen werden, was die Aufrechterhaltung der Torsionssteifigkeit des Rotorblattes gewährleistet. Gleichzeitig bietet diese Schnittstelle eine Biegeschnittstelle, welche mechanische Lasten zwischen dem Biegeaktuator und dem Rotorblattprofil übertragen kann. Elektrische oder andere Anschlüsse für die Betätigung und ggf. Sensorik des Biegeaktuators können z.B. innerhalb des schlitzartigen Kanals ausgebildet sein.

Alternativ wird die Befestigungseinrichtung durch ein U-förmiges Profil gebildet, das zur Hinterkante des Profils gewölbt ist und dessen offene Seite der Profilnase zugewandt ist. Eine Anschlussprofil-Struktur für den Biegeaktuator, die als zur Profilhinterkante sich erstreckender und offener Kanal gebildet ist, ist in einem zweiten, ebenfalls zur Hinterkante des Profils gewölbten Profil geformt. Das zweite im Wesentlichen U-förmige Profil übergreift außenseitig das erste Profil. Diese Führung bzw. Anschlussprofil-Struktur für den Biegeaktuator kann beispielsweise als schlitzartige Öffnung gestaltet sein, in welche der Biegeaktuator einschieb- bzw. einführbar und durch Form- und/oder Kraftschluss verankerbar ist. Alternativ kann sie als Vorsprung gestaltet sein, welchen der Biegeaktuator außenseitig umgreift und durch den die elektrische Kontaktierung führbar ist. In jedem Fall wird eine Scherschnittstelle zwischen der oberen und der unteren Deckhaut, welche Scherkräfte überträgt, vorgesehen.

Die die Anschlussprofil-Struktur bildenden Profilelemente können direkt oder indirekt, z. B. über Abschnitte von weiteren Profil- oder Verbindungselementen, mit der oberen oder unteren Deckhaut verbunden sein. Außerdem könne sie jeweils ein- oder mehrteilig gestaltet sein.

Die verschiedenen Elemente der Befestigungseinrichtung, wenn diese mehrteilig ist (z.B. das erste U-förmige Profil und/oder eine Verankerung im Profilkern), können miteinander durch Form- und/oder Kraftschluss verbunden sein. Zur Erhöhung der Steifigkeit der Schnittstelle ist es bevorzugt, dass die Profile zusätzlich mit einem die Steifigkeit erhöhenden zweiten Füllmaterial zumindest teilweise ausgefüllt sind. Vorzugsweise ist der Biegeaktuator oder die Anschlussprofil-Struktur in diesem Bereich mit erhöhter Steifigkeit befestigt. Die Steifigkeit dieses zweiten Füllmaterials sollte höher als die des Profilkerns sein. Zur Vermeidung von zu großen Steifigkeitssprüngen der Materialien kann das zweite Füllmaterial mit Einbuchtungen oder Vertiefungen gestaltet sein, um einen allmählichen Übergang vom zweiten Füllmaterial zum Profilkern und/oder der Deckhaut zu erzielen.

Eine weitere alternative Anschlussstruktur sieht ein U-förmiges Profil, das zur Hinterkante des Profils gewölbt ist, und einen sich zur Hinterkante des Profils erstreckenden Fortsatz vor. An diesem Fortsatz ist der Biegeaktuator außenseitig befestigbar.

Das U-förmige Profil kann symmetrisch oder asymmetrisch in allen Konfigurationen gestaltet sein. Die Aufnahmen zur Befestigung des Biegeaktuators können an dem ersten U-förmigen Kanal nach Bedarf asymmetrisch oder symmetrisch vorgesehen sein.

Nachfolgend wird die Erfindung beispielhaft anhand der beigefügten Figuren beschrieben.

### KURZE BESCHREIBUNG DER ZEICHNUNGEN

Es zeigt:
- Fig. 1: eine Querschnittsansicht durch ein Rotorblatt gemäß einer Ausführungsform der Erfindung;
- Fig. 2: eine Querschnittsansicht durch ein Rotorblatt gemäß einer anderen Ausführungsform der Erfindung;
- Fig. 3: in vergrößerter Ansicht einen Ausschnitt eines Biegeaktuators des erfindungsgemäßen Rotorblatts in Querschnittsansicht;
- Fig. 4: eine alternative Ausführungsform zu Fig. 3;
- Fig. 5: eine weitere alternative Ausführungsform zu Fig. 3;
- Fig. 6: in vergrößerter Ansicht einen Hinterkantenbereich eines Rotorblattprofils des erfindungsgemäßen Rotorblattes, der über eine elektrische und mechanischen Schnittstelle verfügt;
- Fig. 7: eine Alternative zur elektrischen und mechanischen Schnittstelle aus Fig. 6;
- Fig. 8: eine weitere Alternative zur elektrischen und mechanischen Schnittstelle aus Fig. 6;
- Fig. 9: noch eine weitere Alternative zur elektrischen und mechanischen Schnittstelle aus Fig. 6;
- Fig. 10: eine weitere Alternative zur elektrischen und mechanischen Schnittstelle aus Fig. 6;
- Fig. 11: eine weitere Alternative zur elektrischen und mechanischen Schnittstelle aus Fig. 6;
- Fig. 12: noch eine weitere Alternative zur elektrischen und mechanischen Schnittstelle aus Fig. 6;
- Fig. 13: noch eine weitere Alternative zur elektrischen und mechanischen Schnittstelle aus Fig. 6;
- Fig. 14: noch eine weitere Alternative zur elektrischen und mechanischen Schnittstelle aus Fig. 6;
- Fig. 15: eine Querschnittsansicht durch einen Hinterkantenbereich eines erfindungsgemäßen Rotorblattes ist, wobei homogenes Füllmaterial verwendet wird;
- Fig. 16: eine Ansicht entsprechend Fig. 15, wobei inhomogenes Füllmaterial verwendet wird; und
- Fig. 17: ein Beispiel für den Übergang zwischen einem Profil-Grundkörper und einem Hinterkatenbereich.

### DARSTELLUNG VON BEVORZUGTEN AUSFÜHRUNGSBEISPIELEN

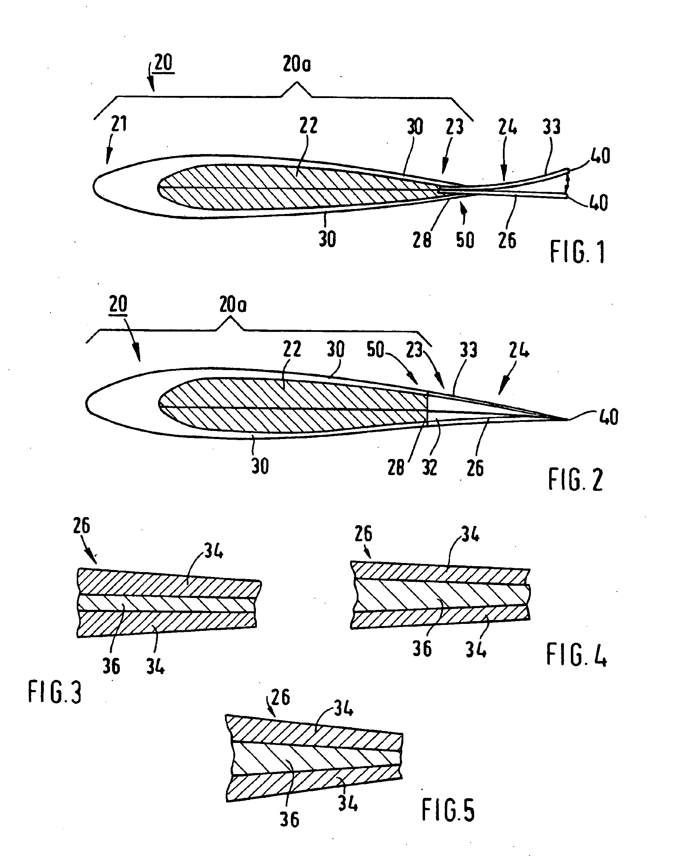

Fig. 1 und Fig. 2 zeigen zwei Ausführungsformen eines erfindungsgemäßen Rotorblatts 20. Das Rotorblatt 20 besitzt einen Profil-Grundkörper 20a mit einem Profilkern 22 und weist ferner einen Profil-Nasenbereich 21 und einen Hinterkantenbereich 23 mit einer Hinterkante 40 auf. Der Profilkern 22 erstreckt sich von dem Profil-Nasenbereich 21 zum Hinterkantenbereich 23. Das Rotorblatt 20 besitzt des Weiteren eine Rotorblatt-Klappe 24, die sich an den Profil-Hinterkantenbereich 23 anschließt. Die in Fig. 1 und 2 gezeigten Querschnitte durch das Rotorblatt 20 sind Querschnitte senkrecht zur Spannweitenrichtung und in Profiltiefenrichtung des Rotorblattes 20.

Bei der in Fig. 1 gezeigten Ausführungsform ist die Rotorblatt-Klappe 24 durch einen platten oder streifenförmigen Biegeaktuator 26 (mutti-morpher Bieger) gebildet, der an seinem zum Profil-Nasenbereich 21 weisenden Ende eine Befestigungseinrichtung 28 aufweist, mit der er an einem Befestigungsbereich 50 in den Profilkern 22 bzw. den Profil-Grundkörper 20a eingebettet und befestigt ist. In Fig. 1 ist der Biegeaktuator 26, der die Rotorblatt-Klappe 24 bildet, in zwei unterschiedlichen Auslenkungspositionen gezeigt. Der Biegeaktuator 26 ist beidseitig mit einer flexiblen bzw. elastischen Schutzhaut 33 bedeckt. Die Schutzhaut 33 kann auch nur einseitig vorgesehen sein. Der Profilkern 22 des Rotorblatts 20 ist durch eine weitgehend starre und zur Stabilität beitragende obere und untere Deckhaut 30 bedeckt. Der Biegeaktuator 26 bildet somit im Hinterkantenbereich 23 des Rotorblattprofils eine Verlängerung des Profilkerns 22 bzw. des Profil-Grundkörpers 20a. Profil-Grundkörper 20a und die Rotorblatt-Klappe 24 mit ihrem Biegeaktuator 26 bilden zusammen das Rotorblattprofil.

Anders als bei dem in Fig. 1 gezeigten Rotorblattprofil 20 ist bei dem in Fig. 2 gezeigten Rotorblattprofil 20 nicht nur die Befestigungseinrichtung 28 des Biegeaktuators 26 im Profilkern 22 bzw. dem Befestigungsbereich 50 des Profil-Grundkörpers 20a eingebettet, sondern es ist zwischen den Schutzhäuten 33 im Bereich der Rotorblatt-Klappe 24 und dem Biegeaktuator 26 ein biegeelastisches erstes Füllmaterial 32 eingebracht. Somit ist nicht nur die Befestigungseinrichtung 28 vor Umwelteinflüssen geschützt im Profil-Grundkörper 20a angebracht, sondern der gesamte Biegeaktuator 26 liegt geschützt. Außerdem kann damit der Übergang zwischen Profil-Grundkörper 20a bzw. dessen Endbereich und der Rotorblatt-Klappe 24 gleichmäßig und ohne störende Kanten oder Stufen geformt werden. Aufgrund der Elastizität des ersten Füllmaterials 32 und der Schutzhaut 33, zumindest im Hinterkantenbereich 23 des Rotorblattes 20, kann eine Auslenkung des Hinterkantenbereichs 23 des Rotorblatts 20 in klappenartiger Weise gewährleistet werden, wobei jedoch zusätzlich die Rotorblatt-Klappe 24 in sich bogenförmig reversibel verformt wird.

Insbesondere bei verhältnismäßig dünnen Rotorblattprofilen ist diese Ausgestaltungsweise bevorzugt, da aufgrund einer verhältnismäßig dünnen Schicht aus elastischem ersten Füllmaterial 32 die Übertragung von der Bewegungs- und Formänderung des Biegeaktuators 26 zur Veränderung der Profilaußenkontur nicht eingeschränkt ist. Somit bleibt eine Gestaltänderung des Hinterkantenbereichs 23 des Rotorblatts 20 in gewünschter, klappenartiger Weise, d.h. zumindest ähnlich wie bei der Verwendung von starren Rotorblatt-Klappen, sichergestellt. Und Unstetigkeitsstellen (Knicke etc.) bei der Klappenauslenkung zwischen Profil-Grundkörper 20a und Rotorblatt-Klappe 24 werden vermieden.

In Fig. 3 bis 5 ist die Ausgestaltung eines Biegeaktuators 26 in größerer Einzelheit in verschiedenen Ausführungsformen gezeigt. Grundsätzlich kommen als Elemente, welche Biegeaktuatoren 26 bilden, Elemente in Betracht, die bei Aktivierung bzw, Betätigung, z.B. durch Anlegen einer elektrischen Spannung oder auch anderweitig, z.B. magnetostriktiv, ihre Gestalt definiert ändern. Beispielsweise kann der Biegeaktuator 26 Piezokeramiken, beispielsweise d33 oder d31 Piezostapel (Piezostacks), oder Piezopolymere enthalten, welche bei Spannungsbeaufschlagung zumindest in einer Raumrichtung definiert, d.h. abhängig von der Größe des Aktivierungsparameters vorhersagbar, expandieren oder sich zusammenziehen. In Fig. 3 bis 5 sind verschiedene Anordnungen des Biegeaktuators 26 gezeigt, der neben Piezokeramiken auch eine Trägerschicht 36 aus Faserverbundwerkstoffmaterial bzw. Kompositmaterial, (z.B. aus glasfaserverstärktem Kunststoff) enthält. Die Biegeaktuatoren 26 sind im Wesentlichen streifen- oder plattenförmig und insbesondere in einer Raumrichtung (der in Fig. 3 bis 5 dargestellten Querschnittsrichtung) dünn im Vergleich zu der lokalen Profildicke im Profilhinterkantenbereich.

Bei der in Fig. 3 dargestellten Ansicht ist zusätzlich zur Optimierung und Anpassung an die Biegeverteilung bzw. die aerodynamische Effektivität der Rotorblatt-Klappe 24 die Schichtdicke (Stapeldicke) des piezoelektrischen Elements 34, das beidseitig auf eine Trägerschicht 36 aus Faserverbundwerkstoff (z.B. glasfaserverstärktem Kunststoff) aufgebracht ist, angepasst. Insbesondere ist die Trägerschicht 36 mit konstanter Dicke gestaltet, während die piezoelektrischen Elementen 34 linear abnehmende Dicken in Profiltiefenrichtung aufweisen. Das piezoelektrische Element kann auch z.B. ein gestaltangepasster Piezostapel (sog. Piezostack) sein, der durch spanende Formgebung bearbeitet ist.

In Fig. 4 ist der umgekehrte Fall gezeigt, bei welchem die Piezoelemente 34 eine konstante Dicke aufweisen, während die Trägerschicht 36 aus glasfaserverstärktem Kunststoff eine variierende Dicke hat.

Fig. 5 zeigt schließlich eine Kombination, bei welcher sowohl die piezoelektrischen Elementen 34 als auch die Trägerschicht 36 aus glasfaserverstärktem Kunststoff in ihren Dicken variabel sind.

Bei der Anordnung im Rahmen einer Rotorblatt-Klappe 24 eines Rotorblattes ist es möglich, mehrere Piezoelemente mit zueinander gleichen oder unterschiedlichen piezoelektrischen Eigenschaften sowohl in Spannweitenrichtung als auch in Profilsehnenrichtung neben bzw. hintereinander, z.B. schachbrettartig oder regelmäßig oder unregelmäßig verteilt, anzuordnen. Dabei können mehrere einzelne Piezostacks zu Segmenten zusammengefasst werden, die wiederum auf Segmente des Materials einer Trägerschicht aufgebracht werden. Die Form, Größe sowie Anordnung sowohl der Segmente der Trägerschicht als auch der Piezoelemente können dabei nach Bedarf gewählt werden. Die Kontaktierung von solchen Segmenten von Piezoelementen kann durch beispielsweise Anlegen einer elektrischen Spannung über einen Leistungsbus in Spannweitenrichtung und Kontaktierung der Piezos in Profilsehnenrichtung erfolgen. Dabei ist es möglich, mehrere zueinander isolierte elektrische Leitungen in Spannweitenrichtung vorzusehen, was Redundanz der Aktuatoren, der Verdrahtung und der Verstärker ergibt. Gleichzeitig können die Segmente in Spannweitenrichtung unabhängig voneinander betätigt werden, so dass Konturen mit glatten Übergängen in Spannweitenrichtung und in Profilsehnenrichtung bei der Klappenauslenkung erzielt werden. Insbesondere kann entlang der Spannweitenrichtung im Betrieb beispielsweise ein Bereich mit nicht ausgelenkter Klappe und ein Bereich mit ausgelenkter Klappe vorgesehen werden, wobei zwischen diesen Bereichen ein gleichmäßiger, stetiger Übergangsbereich vorgesehen ist.

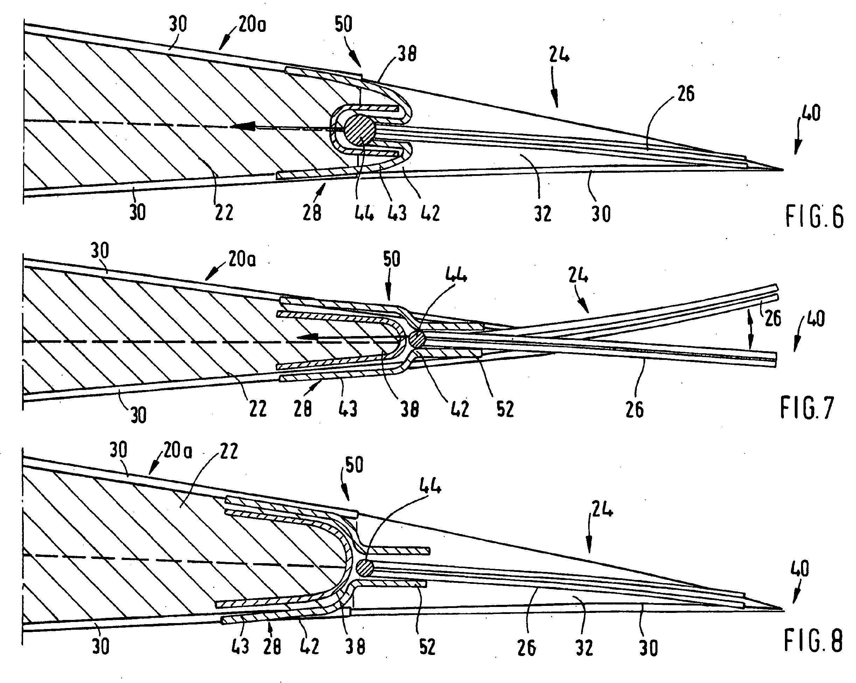

In Fig. 6 bis 14 sind verschiedene Möglichkeiten gezeigt, um Schnittstellen, d.h. wiederholt lösbare und ohne wesentliche Neu-Justierung wiederherstellbare Verbindungen, zwischen dem Profilkern 22 bzw. dem Profil-Grundkörper 20a und der Rotorblatt-Klappe 24 zu realisieren. Wesentlich dabei ist, dass über die Schnittstellen Scherkräfte zwischen der oberen und der unteren Deckhaut 30 übertragen werden können, d.h. eine Verwindung des Rotorblattes möglich ist. Dies erfordert es, dass eine steife Scher- und Biege-Schnittstelle vorgesehen wird, um die im Profil-Grundkörper 20a, der z. B. als Torsionskasten ausgebildet ist, aufgenommenen Kräfte auch im Befestigungsbereich 50 der Rotorblatt-Klappe 24 zu übertragen.

Besonders bevorzugt ist es, wenn die Schnittstelle so gestaltet ist, dass die Rotorblattklappe 24 vollständig vom Profil-Grundkörper 20a trennbar ist. Dazu kann die mechanische Schnittstelle einen formschlüssigen oder kraftschlüssigen Übergang zwischen den trennbaren Bauteilen oder eine Kombination aus beiden vorsehen, beispielsweise durch Schrauben, Bolzen, Nieten oder die Verwendung von Nut- und Federprofilen.

Beispiele zur Erhöhung der Steifigkeit und für die Lage einer z.B. elektrischen Schnittstelle sind in den genannten Figuren ebenfalls gezeigt. Beispielsweise zeigt Fig. 6 eine Anordnung, bei welcher zwischen dem Biegeaktuator 26 und der flexiblen Schutzhaut 33 im Bereich der Rotorblatt-Klappe 24 ein biegeleastisches erstes Füllmaterial 32 eingebracht ist. In den Profilkern 22 ist, zumindest bereichsweise, ein erstes U-förmiges Profil 38 eingebettet, das zur ProfilHinterkante 40 offen ist. Eine durch Profilelemente 42 gebildete Aufnahmestruktur für den Biegeaktuator 26 besteht aus einem doppelt U-förmigen Kanal, wobei die U's der Aufnahmestruktur derart angeordnet sind, dass jedes U einen Schenkel des ersten U-förmigen Profils 38 umgreift. Der Biegeaktuator 26 ist zwischen die U-förmigen Profile 38 der Aufnahmestruktur eingeführt und weist dort in diesem Bereich auch eine elektrische Schnittstelle 44 mit gegenseitigen Anschlüssen auf. Das Gegenstück zur elektrischen Schnittstelle mit anschließender Verdrahtung über den Profilkern 22 kann im bzw. am Profil 38 vorgesehen sein. Die U-förmigen Profile 38, 42 der Aufnahmestruktur sind dabei vorzugsweise derart bemessen, dass ihre zu der oberen bzw. der unteren "starren" Deckhaut 30 des Profil-Grundkörpers gerichteten Schenkel nahe an die Deckhaut 30 gelangen, was die Übertragung von Scherkräften zwischen oberer und unterer Deckhaut 30 verbessert. Darüber hinaus ist die Anordnung vorzugsweise derart gewählt, dass sowohl ein Teil des U-förmigen Profils 38 als auch ein Teil der Profile 42 der Aufnahmestruktur im Profilkern 22 eingebettet ist, während ein anderer Teil jeweils in das Füllmaterial 32 reicht. Somit kann, auch wenn die Struktur als Rotorblatt 20 gestaltet ist, dessen Rotorblatt-Klappe 24 vom Profilkern 22 trennbar ist, gewährleistet werden, dass die mechanische und elektrische Schnittstelle derart definiert sind, dass auch bei wiederholtem Auseinander- und Zusammenbau keinerlei Verschiebungen der Bauteile zueinander auftreten und somit die Verbindung leicht wiederherstellbar ist.

Eine Alternative für den Befestigungsbereich 50 ist in Fig. 7 für einen Fall gezeigt, in dem der Biegeaktuator 26 ohne umgebendes erstes Füllmaterial 32 die Rotorblatt-Klappe 24 bildet. Der Biegeaktuator 26 ist in Fig. 7 in zwei Auslenkungspositionen dargestellt. Anders als bei der in Fig. 6 gezeigten Ausführungsform ist das Profil 38 derart in den Profilkern 22 bzw. an den Hinterkantenbereich des Profil-Grundkörpers 20a eingebracht, dass es zur ProfilHinterkante 40 gewölbt ist. Die durch die Profile 42 gebildete Aufnahmestruktur, die ebenfalls im Wesentlichen eine U-förmige Kanalform hat, umfasst außenseitig das U des Profils 38 mit gleicher Wölbungsrichtung. Elektrische Kontaktierungsmittel und Anschlüsse als elektrische Schnittstelle 44 können wiederum an sowohl der Aufnahmestruktur als auch dem Profil 38 vorgesehen sein, so dass bei einem Trennen der durch das Profil 42 gebildeten Aufnahmestruktur vom Profil 38 und anschließendem erneuten Zusammenbau die Schnittstelle definiert ist. Als mechanische Verstärkung für die Schnittstelle können zusätzliche formschlüssige oder kraftschlüssige Elemente vorgesehen werden. Das Profilelement 42 enthält weiter zur Hinterkante 40 des Rotorblattsprofils gerichtet eine kanalförmige Einstecköffnung 52, durch die der Biegeaktuator 26 geführt wird, und in die er eingesetzt ist. In diesem Fall ist die Befestigungseinrichtung 28 vollständig in den Profilkern 22 bzw. das hintere Ende des Profil-Grundkörpers 20a eingebettet. Nur der Biegeaktuator 26 reicht als Rotorblatt-Klappe 24 mit einem Ende aus dem Profil-Grundkörper 20a zur Hinterkante 40 hin hinaus.

In Fig. 8 ist die zur Fig. 7 entsprechende Anordnung für den Fall gezeigt, dass die gesamte Länge des aus dem Profil-Grundkörper 20a herausragenden Teils des Biegeaktuators 26 in ein elastisches erstes Füllmaterial 32 eingebettet ist. Die Außenkontur des ersten Füllmaterial 32 bildet die Außenkontur der Rotorblatt-Klappe 24 und die Außenkontur des Rotorblattprofils in diesem Bereich. Die Befestigungsstruktur am Profil-Grundkörper, einschließlich der elektrischen und mechanischen Schnittstelle ist gleich wie bei Fig. 7.

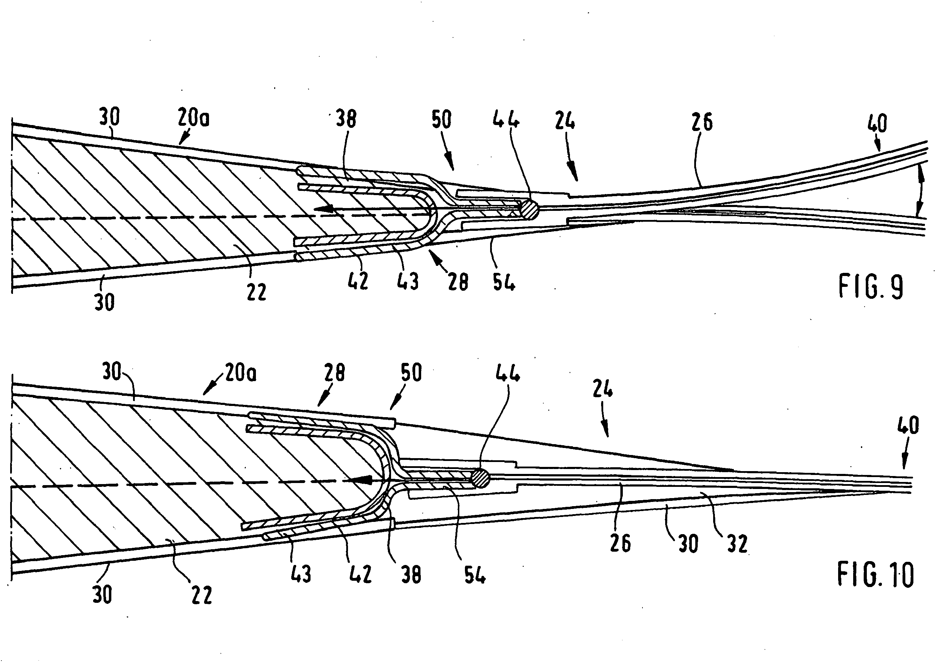

Die Befestigungsstrukturen gemäß Fig. 9 und 10 unterscheiden sich von den Befestigungsstrukturen der Fig. 7 und 8 dadurch, dass der Biegeaktuator 26 nicht in eine kanalförmige Einstecköffnung 52 für den Biegeaktuator 26 eingesetzt ist, sondern ein gegabeltes Ende besitzt, das einen Befestigungsvorsprung 54 außenseitig umgreift. Durch den Befestigungsvorsprung 54 ist lediglich elektrisches Verdrahtungsmaterial für die elektrische Schnittstelle 44 geführt. Wie bei Fig. 8 ist auch bei der Variante nach Fig. 10 der Biegeaktuator von dem ersten Füllmaterial 32 bedeckt, welches auch über die Befestigungseinrichtung 50 bzw. deren Befestigungsvorsprung 54 und die Schnittstelle 44 reicht.

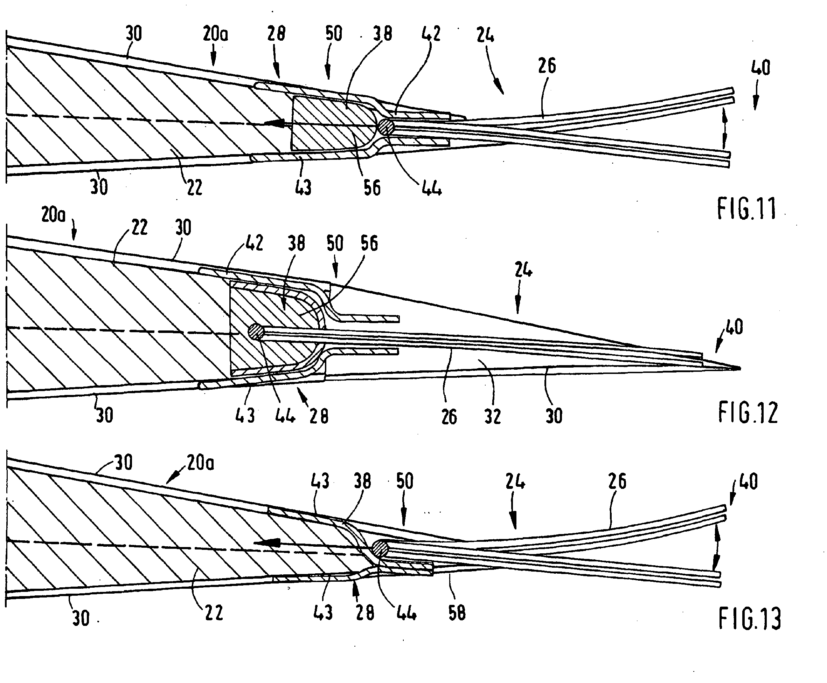

Die Befestigungsstruktur gemäß Fig. 11 und 12 entspricht im Wesentlichen der Befestigungsstruktur gemäß Fig. 7 und 8. Zur Erhöhung der Steifigkeit ist das U-förmige Profil 38 jedoch mit einem zweiten Füllmaterial 56 ausgefüllt, welches eine höhere Steifigkeit als das Material des Profilkerns 22 besitzt. Bei der Ausführungsform nach Fig. 12 besitzt das zweite Füllmaterial 56 eine sich in Richtung Hinterkante einwölbende Einbuchtungen, so dass ein allmählicher Übergang vom zweiten Füllmaterial 56 zum Profilkern 22 und der oberen und unteren Deckhaut 30 erzielt wird.

Der Biegeaktuator 26 kann seinerseits jeweils durch Form- und/oder Kraftschluss an der durch die Profile 42 gebildeten Aufnahmestruktur befestigt sein.

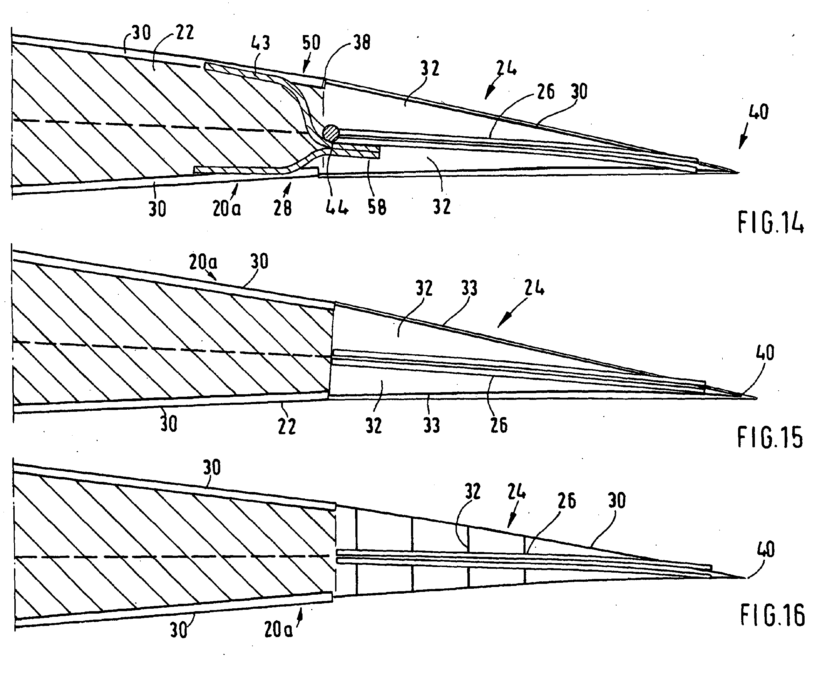

Fig. 13 und 14 zeigen weitere Ausführungsformen für den Befestigungsbereich 50. Während bei den Befestigungsstrukturen gemäß Fig. 6 bis 10 jeweils im Wesentlichen symmetrische Profilelemente 38, 42 für im Wesentlichen symmetrische Rotorblattprofile und/oder symmetrische Klappenprofile und Klappenausschläge verwendet wurden, deren Schenkel 42 jeweils an die Deckhaut 30 im Bereich des Profilkerns 22 reichen, wird bei den Befestigungsstrukturen gemäß Fig. 13 und 14 nur ein durch ein Profil 38 gebildeter asymmetrischer Kanal verwendet, der einen asymmetrisch angebrachten Befestigungsvorsprung 58 aufweist. Einseitig an diesem Vorsprung 58 ist der Biegeaktuator 26 form- und/oder kraftschlüssig befestigt. Diese Ausgestaltungsweise eignet sich insbesondere für asymmetrische Rotorblattprofile und/oder asymmetrische Klappenprofile und Klappenausschläge. Auch diese Schnittstellenstruktur kann Scherkräfte zwischen der oberen und unteren Deckhaut 30 übertragen und eine steife Biegeschnittstelle sicherstellen. Die Befestigung des Biegeaktuators 26 an dem Vorsprung 58 kann beispielsweise durch Kleben, Nieten, Löten, Schrauben oder ähnliches erfolgen.

Bei Ausführungsformen, bei denen der Biegeaktuator 26 in ein elastisches erstes Füllmaterial 32 eingebettet bzw. von diesem überzogen ist, kann das erste Füllmaterial 32, wie in Fig. 15 gezeigt, als homogenes erstes Füllmaterial 32 ausgestaltet sein, beispielsweise als ein Schaum oder ein Elastomerwerkstoff oder z.B. Silikon. Das erste Füllmaterial 32 füllt den Bereich zwischen der Ober- und Unterseite des Biegeaktuators 26 und einer biegeelastischen bzw. flexiblen äußeren Schutzschicht 33 aus, die an dieser Stelle die Außenkontur der Klappe und des Rotorblattprofils bildet. Das erste Füllmaterial 32 und die Schutzschicht 33 folgen der reversiblen Verbiegung des Biegeaktuators 26, woraus ein bogenförmiger, stetiger Rotorblatt-Klappenausschlag resultiert.

Alternativ dazu kann für das erste Füllmaterial 32 auch inhomogenes Material oder eine Struktur verwendet werden, wie sie in Fig. 16 gezeigt ist. Bei dieser Struktur handelt es sich beispielsweise um eine Art Tragwerk, z. B. aus sich in Profildickenrichtung erstreckenden rippenartigen Versteifungselementen, das ebenfalls die ausreichende Elastizität und Flexibilität aufweist, um der Bewegung des Biegeaktuators 26 zu folgen. Dabei kann für das erste Füllmaterial 32 ebenso wie für die Schutzhaut 33 eine etwaige Richtungsabhängigkeit des Füllmaterials bzw. der Schutzhaut ausgenutzt werden.

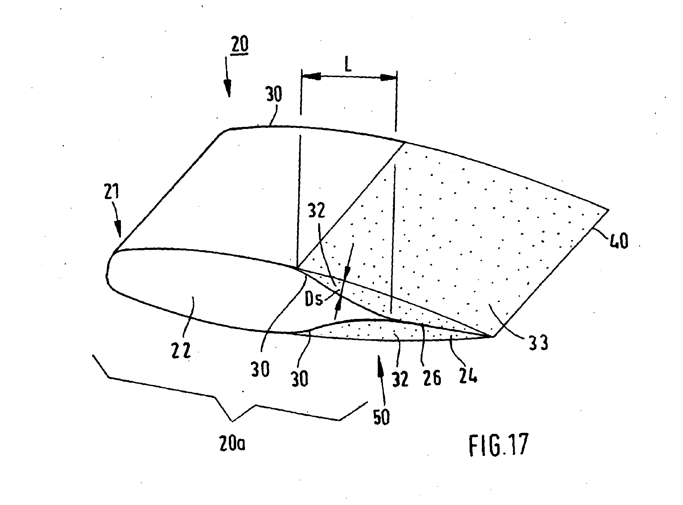

In den vorher erörterten Ausführungsformen der Fig. 1 bis 16 ist der Übergang zwischen Rotorblatt-Klappe 24 und Profilkern 22 bzw. Profil-Grundkörper 20a und dem ersten Füllmaterial 32 stets als relativ abrupter, geradliniger Übergang dargestellt worden. Selbstverständlich kann der Übergang jedoch auch allmählich erfolgen. Wie in Fig. 17 gezeigt, ist es z.B. möglich, dass sich der Profil-Grundkörper 20a mit dem Befestigungsbereich 50 zur Hinterkante 40 hin verjüngt. Und das auf der Ober- und Unterseite des Biegeaktuators 26 vorgesehene erste Füllmaterial 32 erstreckt sich bei dieser Ausführungsform über den Befestigungsbereich 50 hinweg bis auf den Profil-Grundkörper 20a bzw. dessen obere und untere Deckhaut 30. Die in Profiltiefenrichtung gemessene Übergangslänge L, in der sich das erste Füllmaterial 32 über den Profil-Grundkörper 20a erstreckt, kann in Abhängigkeit des vorbestimmten Rotorblattprofils sowie der geforderten profilgeometrischen Eigenschaften der Rotorblatt-Klappe 24 im Neutralzustand und im ausgelenkten Zustand festgelegt werden. Aus der Fig. 17 geht des weiteren hervor, dass die lokale Schichtdicke Dₛ des ersten Füllmaterials 32 ausgehend von der Hinterkante 40 zum Befestigungsbereich 50 zunächst zunimmt und dann anschließen in Richtung zu, Profil-Nasenbereich 21 hin wieder abnimmt.

Die Erfindung ist nicht auf die obigen Ausführungsbeispiele beschränkt. Im Rahmen des Schutzumfangs kann das erfindungsgemäße Rotorblatt vielmehr auch andere als die oben konkret beschriebenen Ausgestaltungsformen annehmen. So ist es z.B. möglich, dass der den Biegeaktuator 26 und die Rotorblatt-Klappe 24 enthaltende Teil des Rotorblattprofils, einschließlich desjenigen Teils des Profil-Grundkörpers 20a, der den Befestigungsbereich 50 aufweist, auch als ein separates Klappenmodul ausgestaltet ist, welches an dem verbleibenden Teil des Profil-Grundkörpers 20a lösbar zu befestigen ist.

### Bezugszeichenliste

- 20: Rotorblatt
- 20a: Profil-Grundkörper
- 21: Profil-Nasenbereich
- 22: Profilkern
- 23: Hinterkantenbereich
- 24: Rotorblatt-Klappe
- 26: Biegeaktuator
- 28: Befestigungseinrichtung
- 30: Deckhaut
- 32: Biegeelastisches Füllmaterial
- 33: Biegeelastische Schutzhaut
- 34: Piezoelektrisches Element
- 36: Trägerschicht
- 38: U-förmiges Profil
- 40: Profilhinterkante
- 42: Profilelement
- 43: Profilbereich
- 44: Elektrische Schnittstelle und/oder Anschlüsse
- 50: Befestigungsbereich
- 52: Einstecköffnung
- 54: Befestigungsvorsprung
- 56: Füllmaterial
- 58: Befestigungsvorsprung

- Dₛ: Lokale Schichtdicke des ersten Füllmaterials 32
- L: Übergangslänge

## Patentansprüche

1. Rotorblatt (20), insbesondere für ein Drehflügelflugzeug, enthaltend ein aerodynamisch wirksames Rotorblattprofil, das
einen Profil-Nasenbereich (21),
einen Profil-Grundkörper (20a) mit einem Profilkern (22), sowie einen Profil-Hinterkantenbereich (23) mit einer Hinterkante (40) besitzt; und
einen sich reversibel verbiegbaren plattenförmigen und/oder streifenförmigen Biegeaktuator (26), der
mit einem ersten Ende an einem zur Hinterkante (40) hin weisenden Endbereich des Profil-Grundkörpers (20a) zu befestigen ist und
mit einem zweiten Ende frei aus dem Profil-Grundkörper (20a) und dessen Endbereich zur Hinterkante (40) hin herausragt und
mit diesem herausragenden zweiten Ende einen Teil des Profil-Hinterkantenbereichs (23) des Rotorblattprofils und zumindest ein Teil einer beweglichen Rotorblatt-Klappe (24) bildet, die bei einer Verbiegung des Biegeaktuators (26) zu einem bogenförmigen Rotorblatt-Klappenausschlag verformbar ist, **dadurch gekennzeichnet, dass** der Biegeaktuator (26) ein flächiger Biegeaktuator (26) ist, wobei eine obere und untere Deckhaut (30) die den Profilkern (22) umhüllt und die sich bis auf das erste Ende des plattenförmigen Biegeaktuators (26) erstreckt und den Biegeaktuator (26) hält, und das zweite Ende des Biegeaktuators (26) zwischen der oberen und unteren Deckhaut (30) frei herausragt.

2. Rotorblatt (20) nach dem Anspruch 1, **dadurch gekennzeichnet, dass** sich die Deckhaut (30) bis auf den plattenförmigen Biegeaktuator (26) erstreckt und in diesem Abschnitt eine gegenüber denjenigen Bereichen der Deckhaut (30), welche den Profil-Grundkörper mit seinem Profilkern (22) umhüllen, reduzierte Hautdicke besitzt, so dass die Deckhaut (30) in diesem Abschnitt zusammen mit dem Biegeaktuator (26) zu dem bogenförmigen Rotorblatt-Klappenausschlag verformbar ist.

3. Rotorblatt (20) nach einem der Ansprüche 1 oder 2, **dadurch gekennzeichnet, dass** sich die Deckhaut (30) bis auf den plattenförmigen Biegeaktuator (26) erstreckt und im Bereich des ersten Endes des Biegeaktuators eine lokale Unstetigkeitsstelle in ihrer Biegesteifigkeit aufweist, welche Unstetigkeitsstelle ein virtuelles Rotorblatt-Klappengelenk bildet, über das der Profil-Hlnterkantenbereich (23) zusammen mit einer Verbiegung des Biegeaktuators (26) zu einem Rotorblatt-Klappenausschlag verformbar ist.

4. Rotorblatt (20) nach Anspruch 1, **dadurch gekennzeichnet, dass** der plattenförmige Biegeaktuator (26) ein plattenförmiges Element aus einer Formgedächtnis-Legierung aufweist.

5. Rotorblatt (20) nach Anspruch 1, **dadurch gekennzeichnet, dass** der plattenförmige Biegeaktuator (26) ein plattenförmiger piezoelektrlscher Biegeaktuator (34) ist.

6. Rotorblatt (20) nach einem der vorhergehenden Ansprüche, **dadurch gekennzeichnet, dass** der plattenförmige oder streifenförmige Biegeaktuator (26) auf mindestens einer plattenförmigen, reversibel verbiegbaren Trägerschicht (36) angeordnet ist.

7. Rotorblatt nach einem der Ansprüche 5 oder 6, **dadurch gekennzeichnet, dass** der piezoelektrische Blegeaktuator (34) und/oder die Trägerschicht (36) eine variierende Dicke aufweisen.

8. Rotorblatt (20) nach einem der vorhergehenden Ansprüche, **dadurch gekennzeichnet, dass** die reversible verbiegbare Trägerschicht (36) aus einem Faserverbundwerkstoffmaterial, insbesondere aus einem Glasfaser verstärkten Kunststoffmaterial hergestellt ist.

9. Rotorblatt (20) nach einem der vorhergehenden Ansprüche, **dadurch gekennzeichnet, dass** auf beiden Seiten der Trägerschicht (36) ein plattenförmiger Biegeaktuator (26) angeordnet ist.

10. Rotorblatt (20) nach einem der vorhergehenden Ansprüche, **dadurch gekennzeichnet, dass** der Biegeaktuator (26) einseitig auf der Trägerschicht (36) angeordnet ist.

11. Rotorblatt (20) nach einem der vorhergehenden Ansprüche, **dadurch gekennzeichnet, dass** die Trägerschicht (36) als Rückstelleinrichtung für den plattenförmigen Biegeaktuator (26) ausgebildet ist.

12. Rotorblatt (20) nach einem der vorhergehenden Ansprüche, **dadurch gekennzeichnet, dass** zumindest das zweite Ende des plattenförmigen Biegeaktuators (26), welches die bewegliche Rotorblatt-Klappe (24) bildet, mit einem flexiblen, biegeelastischen ersten Füllmaterial (32) überzogen ist, welches in diesem Bereich des Rotorblattprofils dessen Außenkontur bildet.

13. Rotorblatt (20) nach Anspruch 12, **dadurch gekennzeichnet, dass** sich das flexible, biegeelastische erste Füllmaterial (32) bis auf den Profil-Grundkörper (20a) oder auf oder unter dessen Deckhaut (30) erstreckt.

14. Rotorblatt (20) nach einem der Ansprüche 12 oder 13, **dadurch gekennzeichnet, dass** das flexible, biegeelastische erste Füllmaterial (32) ein homogenes, flexibles biegeelastisches Füllmaterial (32) ist, insbesondere ein Elastomerwerkstoff, insbesondere ein Silikonwerkstoff, oder ein Schaummaterial.

15. Rotorblatt (20) nach einem der Ansprüche 12 oder 13, **dadurch gekennzeichnet, dass** das flexible, biegeelastische erste Füllmaterial (32) ein inhomogenes, flexibles biegeelastisches Füllmaterial (32) ist, insbesondere ein Material mit rippen- oder tragwerk- oder skelettartigen Verstelfungselementen.

16. Rotorblatt (20) nach einem der Ansprüche 12 bis 15, **dadurch gekennzeichnet, dass** das flexible, biegeelastische Füllmaterial (32) eine flexible, biegeelastische Schutzhaut (33) besitzt, welche zumindest im Bereich der Rotorblatt-Klappe (24) die Außenkontur des Rotorblattprofils bildet.

17. Rotorblatt (20) nach Anspruch 16, **dadurch gekennzeichnet, dass** die flexible, biegeelastische Schutzhaut (33) integraler Bestandteil des flexiblen, biegeelastischen Füllmaterials (32) ist.

18. Rotorblatt (20) nach Anspruch 16, **dadurch gekennzeichnet, dass** die flexible, biegeelastische Schutzhaut (33) eine auf das flexible, biegeelastische erste Füllmaterial (32) aufgebrachte separate Schutzschicht ist.

19. Rotorblatt (20) nach einem der vorhergehenden Ansprüche, **dadurch gekennzeichnet, dass** an oder in demjenigen Endbereich des Profil-Grundkörpers (20a), der dem plattenförmigen Biegeaktuator (26) zugeordnet ist, eine Befestigungseinrichtung (28, 50) vorgesehen ist, an welcher
- der Biegeaktuator (26), oder
- ein die Rotorblatt-Klappe (24) mit dem Biegeaktuator (26) aufweisender Profil-Hinterkantenbereich (23)
lösbar am Rotorblattprofil zu befestigen ist.

20. Rotorblatt (20) nach Anspruch 19, **dadurch gekennzeichnet, dass** die Befestigungseinrichtung (28) eine mit dem Endbereich des Profil-Grundkörpers (20a) verbindbare Abschlussprofil-Struktur aufweist, welche eine Einstecköffnung (52; 54) zum Einstecken des ersten Endes des Biegeaktuators (26) besitzt.

21. Rotorblatt nach Anspruch 19, **dadurch gekennzeichnet, dass** die Befestigungseinrichtung (28, 50) eine mit dem Endbereich des Profil-Grundkörpers (20a) verbindbare Abschlussprofl-Struktur aufweist, welche einen Befestigungsvorsprung (54, 56) zum Befestigen des ersten Endes des plattenförmigen Biegeaktuators (26) aufweist.

22. Rotorblatt (20) nach Anspruch 21, **dadurch gekennzeichnet, dass** das erste Ende des plattenförmigen Biegeaktuators (26) einen Anschlussbereich besitzt, der auf den Befestigungsvorsprung (54) aufsteckbar ist.

23. Rotorblatt (20) nach Anspruch 21, **dadurch gekennzeichnet, dass** das erste Ende des plattenförmigen Biegeaktuators (26) streifenförmig ausgebildet und flächig auf dem Befestigungsvorsprung (58) anzuordnen und an diesem zu fixieren ist.

24. Rotorblatt (20) nach einem der Ansprüche 21 bis 23, **dadurch gekennteichnet, dass** die Abschlussprofil-Struktur ein erstes, im Wesentlichen U-förmiges Profil (38) aufweist, dessen offene Seite dem Profil-Nasenbereich (21) zugewandt ist und dessen Schenkel direkt oder indirekt mit der oberen und unteren Deckhaut (30) verbindbar ist.

25. Rotorblatt (20) nach Anspruch 24, **dadurch gekennzeichnet, dass** das erste U-förmige Profil (38) an seiner der Hinterkante (40) zugewandten Seite einen Profilbereich aufweist, welcher
- die Einstecköffnung (52), oder
- den Befestigungsvorsprung (58)
formt.

26. Rotorblatt (20) nach Anspruch 24, **dadurch gekennzeichnet, dass** auf dem ersten U-förmigen Profil (38) mindestens ein Profilelement (42) befestigt ist, welches das U-förmige Profil (38) umgreift und
- mit einem ersten Profilbereich (43) direkt oder indirekt mit der oberen und/oder unteren Deckhaut (30) verbindbar ist und
- mit einem der Hinterkante (40) zugewandten zweiten Profilbereich
- die Einstecköffnung (52), oder
- den Befestigungsvorsprung (54, 58)
bildet.

27. Rotorblatt (20) nach Anspruch 24 oder 25, **dadurch gekennzeichnet, dass**
das erste U-förmige Profil (38) an seiner der Hinterkante (40) zugewandten Seite einen sich in Richtung Profil-Nasenbereich (21) und Profilkern (22) erstreckenden schlaufenförmigen Profilbereich aufweist, der eine zur Hinterkante (40) hin offene Einbuchtung formt, welche die Einstecköffnung (52) bildet, und
der schlaufenförmige Profilbereich von der Seite des Profilkerns (22) her von einem zweiten, im Wesentlichen U-förmigen Profil (44) umschlossen ist, dessen offene Seite der Hinterkante (40) zugewandt ist.

28. Rotorblatt (20) nach einem der Ansprüche 24 bis 27, **dadurch gekennzeichnet, dass** das erste U-förmige Profil (38) zumindest teilweise mit einem zweiten Füllmeterial (56) ausgefüllt ist, welches eine höhere Steifigkeit als das Material des Profilkerns (22) besitzt.

29. Rotorblatt (20) nach einem der vorhergehenden Ansprüche, **dadurch gekennzeichnet, dass** die Befestigungseinrichtung (28) eine Schnittstelle und/oder Anschlüsse, insbesondere eine elektrische Schnittstelle und/oder elektrische Anschlüsse (44), für eine Energieversorgung und/oder Steuerung des plattenförmigen Biegeaktuators (26) aufweist.

30. Drehflügelflugzeug, insbesondere Hubschrauber, mit wenigstens einem Rotor mit mindestens einem Rotorblatt (20) nach einem der vorhergehenden Ansprüche.

## Claims

1. Rotor blade (20), in particular for a rotorcraft, comprising
an aerodynamically effective rotor blade profile having
a profile tip region (21),
a profile base body (20a) with a profile core (22), and
a profile trailing edge region (23) with a trailing edge (40); and
a reversibly bendable plate-shaped and/or strip-shaped flexural actuator (26) which
with a first end is to be mounted on an end region of the profile base body (20a) facing the trailing edge (40) and
with a second end freely projects from the profile base body (20a) and the end region of the latter towards the trailing edge (40) and
with this projecting second end forms part of the profile trailing edge region (23) of the rotor blade profile and at least part of a movable rotor blade flap (24), which is deformable into an arc-shaped rotor blade flap deflection upon bending of the flexural actuator (26), **characterised in that** the flexural actuator (26) is a planar flexural actuator (26), an upper and lower skin (30) encasing the profile core (22) and extending as far as onto the first end of the plate-shaped flexural actuator (26) and holding the flexural actuator (26), and the second end of the actuator (26) freely projecting between the upper and lower skin (30).

2. Rotor blade (20) according to Claim 1, **characterised in that** the covering skin (30) extends as far as onto the plate-shaped flexural actuator (26) and in this section has a reduced skin thickness compared to those regions of the covering skin (30) which encase the profile base body with its profile core (22), so that the covering skin (30) in this section is deformable together with the flexural actuator (26) into the arc-shaped rotor blade flap deflection.

3. Rotor blade (20) according to one of Claims 1 or 2, **characterised in that** the covering skin (30) extends as far as onto the plate-shaped flexural actuator (26) and includes a local discontinuity in its flexural strength in the region of the first end of the flexural actuator (26), the local discontinuity forming a virtual rotor blade flap articulation via which the profile trailing edge region (23) is deformable together with bending of the flexural actuator (26) into a rotor blade flap deflection.

4. Rotor blade (20) according to Claim 1, **characterised in that** the plate-shaped flexural actuator (26) has a plate-shaped element made of a shape-memory alloy.

5. Rotor blade (20) according to Claim 1, **characterised in that** the plate-shaped flexural actuator (26) is a plate-shaped piezoelectric flexural actuator (34).

6. Rotor blade (20) according to one of the preceding claims, **characterised in that** the plate-shaped or strip-shaped flexural actuator (26) is disposed on at least one plate-shaped reversibly bendable support layer (36).

7. Rotor blade according to one of Claims 5 or 6, **characterised in that** the piezoelectric flexural actuator (34) and/or the support layer (36) have a varying thickness.

8. Rotor blade (20) according to one of the preceding claims, **characterised in that** the reversibly¹ bendable support layer (36) is produced from a fibre composite material, in particular from a plastic material reinforced with glass fibre.

9. Rotor blade (20) according to one of the preceding claims, **characterised in that** a plate-shaped flexural actuator (26) is disposed on both sides of the support layer (36).

10. Rotor blade (20) according to one of the preceding claims, **characterised in that** the flexural actuator (36) is disposed on one side of the support layer (36).

11. Rotor blade (20) according to one of the preceding claims, **characterised in that** the support layer (36) is formed as a return device for the plate-shaped flexural actuator (26)

12. Rotor blade (20) according to one of the preceding claims, **characterised in that** at least the second end of the plate-shaped flexural actuator (26) which forms the movable rotor blade flap (24) is covered with a flexible, flexurally elastic first filling material (32) which forms the outer contour of the rotor blade profile in this region thereof.

13. Rotor blade (20) according to Claim 12, **characterised in that** the flexible, flexurally elastic ¹ "reversible" in the German should read "reversibel" and has been corrected here first filling material (32) extends as far as onto the profile base body (20a) or onto or under the covering skin (30) thereof.

14. Rotor blade (20) according to one of Claims 12 or 13, **characterised in that** the flexible, flexurally elastic first filling material (32) is a homogenous, flexible flexurally elastic filling material (32), in particular an elastomer material, in particular a silicone material, or a foam material.

15. Rotor blade (20) according to one of Claims 12 or 13, **characterised in that** the flexible, flexurally elastic first filling material (32) is an inhomogeneous, flexible flexurally elastic filling material (32), in particular a material with rib-like, framework-like or skeleton-like stiffening elements.

16. Rotor blade (20) according to one of Claims 12 to 15, **characterised in that** the flexible, flexurally elastic filling material (32) has a flexible, flexurally elastic protective skin (33), which forms the outer contour of the rotor blade profile at least in the region of the rotor blade flap (24).

17. Rotor blade (20) according to Claim 16, **characterised in that** the flexible, flexurally elastic protective skin (33) is an integral part of the flexible, flexurally elastic filling material (32).

18. Rotor blade (20) according to Claim 16, **characterised in that** the flexible, flexurally elastic protective skin (33) is a separate protective layer applied to the flexible, flexurally elastic first filling material (32).

19. Rotor blade (20) according to one of the preceding claims, **characterised in that** a mounting device (28, 50) is provided on or **in that** end region of the profile base body (20a) associated with the plate-shaped flexural actuator (26), on which mounting device
- the flexural actuator (26) or
- a profile trailing edge region (23) having the rotor blade flap (24) with the flexural actuator (26)
is to be detachably mounted on the rotor blade profile.

20. Rotor blade (20) according to Claim 19, **characterised in that** the mounting device (28) includes a terminating profile structure connectable to the end region of the profile base body (20a), the structure having an insertion opening (52; 54) for insertion of the first end of the flexural actuator (26).

21. Rotor blade (20) according to Claim 19, **characterized in that** the mounting device (28, 50) includes a terminating profile structure connectable to the end region of the profile base body (20a), the structure having a mounting projection (54, 58) for mounting the first end of the plate-shaped flexural actuator (26).

22. Rotor blade (20) according to Claim 21, **characterised in that** the first end of the plate-shaped actuator (26) has a connecting region which can be fitted onto the mounting projection (54).

23. Rotor blade (20) according to Claim 21, **characterised in that** the first end of the plate-shaped flexural actuator (26) is of strip-shaped form and is to be disposed in a planar manner on the mounting projection (58) and fixed thereto.

24. Rotor blade (20) according to one of Claims 21 to 23, **characterised in that** the terminating profile structure includes a first, substantially U-shaped profile (38) having an open side facing the profile tip region (21) and a limb connectable directly or indirectly to the upper and lower covering skin (30).

25. Rotor blade (20) according to Claim 24, **characterised in that** the first U-shaped profile (38) includes a profile region on its side facing the trailing edge (40), the profile region forming
- the insertion opening (52) or
- the mounting projection (58).

26. Rotor blade (20) according to Claim 24, **characterised in that** at least one profile element (42) is mounted on the first U-shaped profile (38), and fits around the U-shaped profile (38) and
- with a first profile region (43) is directly or indirectly connectable to the upper and/or lower covering skin (30) and
- with a second profile region facing the trailing edge (40) forms
- the insertion opening (52) or
- the mounting projection (54, 58).

27. Rotor blade (20) according to Claim 24 or 25, **characterised in that**
the first U-shaped profile (38) includes a loop-shaped profile region on its side facing the trailing edge (40), the loop-shaped profile region extending towards the profile tip region (21) and the profile core (22) and forming an indentation open towards the trailing edge (40), the indentation forming the insertion opening (52), and
the loop-shaped profile region is enclosed from the side of the profile core (22) by a second, substantially U-shaped profile (44), the open side of which faces the trailing edge (40).

28. Rotor blade (20) according to one of Claims 24 to 27, **characterised in that** the first U-shaped profile (38) is at least partially filled with a second filling material (56) having a stiffness greater than the material of the profile core (22).

29. Rotor blade (20) according to one of the preceding claims, **characterised in that** the mounting device (28) includes an interface and/or connectors, in particular an electrical interface and/or electrical connectors (44), to supply energy to and/or control the plate-shaped flexural actuator (26).

30. Rotorcraft, in particular helicopter, having at least one rotor with at least one rotor blade (20) according to one of the preceding claims.

## Revendications

1. Pale (20), spécialement conçue pour un engin à ailes rotatives, comprenant un profil de pale aérodynamique, qui inclut
une zone avant de profil (21),
un corps de base de profil (20a) avec un noyau de profil (22), et
une zone de bord arrière de profil (23) avec un bord arrière (40) et
un actionneur de cambrure en forme de plaque et/ou de bande à déformation réversible (26),
dont une première extrémité doit être fixée à une zone d'extrémité du corps de base du profil (20a) orientée vers le bord arrière (40) et
dont la deuxième extrémité dépasse du corps de base du profil (20a) et de sa zone d'extrémité vers le bord arrière (40) et
qui forme avec cette deuxième extrémité en saillie une partie de la zone du bord arrière (23) du profil de pale et au moins une partie d'un volet de pale mobile (24) qui peut se déformer en cas de courbure de l'actionneur de cambrure (26) en une déviation du volet de pale en forme d'arc, **caractérisé en ce que** l'actionneur de cambrure (26) est un actionneur de cambrure de contact (26), où une membrane supérieure et intérieure (30) enveloppe le noyau du profil (22) et s'étend jusqu'à la première extrémité de l'actionneur de cambrure en forme de plaque (26) et maintient l'actionneur de cambrure (26), tandis que la deuxième extrémité de l'actionneur de cambrure (26) dépasse librement entre la membrane supérieure et intérieure (30).

2. Pale (20) selon la revendication 1, **caractérisée en ce que** la membrane (30) s'étend jusqu'à l'actionneur de cambrure en forme de plaque (26) et présente dans cette section une membrane réduite par rapport aux zones de la membrane (30) qui enveloppent le corps de base du profil avec son noyau (22), de manière à ce que la membrane dans cette section puisse se déformer avec l'actionneur de cambrure (26) en une déviation du volet de pale en forme d'arc.

3. Pale (20) selon l'une des revendications 1 ou 2, **caractérisée en ce que** la membrane (30) s'étend jusqu'à l'actionneur de cambrure en forme de plaque (26) et présente dans la zone de la première extrémité de l'actionneur de cambrure un point de discontinuité local au niveau de sa rigidité à la flexion, ce point de discontinuité formant une articulation de volet virtuelle qui permet à la zone du bord arrière du profil (23) de se déformer lors d'un déplacement de l'actionneur de cambrure (26) en donnant lieu à une déviation du volet de pale.

4. Pale (20) selon la revendication 1, **caractérisée en ce que** l'actionneur de cambrure en forme de plaque (26) constitue un élément en forme de plaque en alliage à mémoire de forme.

5. Pale (20) selon la revendication 1, **caractérisée en ce que** l'actionneur de cambrure en forme de plaque (26) est un actionneur de cambrure piézoélectrique (34) en forme de plaque.

6. Pale (20) selon l'une des précédentes revendications, **caractérisée en ce que** l'actionneur de cambrure en forme de plaque ou de bande (26) est placé sur au moins un substrat en forme de plaque et à déformation réversible (36).

7. Pale selon l'une des revendications 5 ou 6, **caractérisée en ce que** l'actionneur de cambrure piézoélectrique (34) et/ou le substrat (38) présentent une épaisseur variable.

8. Pale (20) selon l'une des précédentes revendications, **caractérisée en ce que** le substrat à déformation réversible (36) est constitué d'un matériau composite renforcé par des fibres, plus particulièrement un plastique renforcé aux fibres de verre.

9. Pale (20) selon l'une des précédentes revendications, **caractérisée en ce que** un actionneur de cambrure en forme de plaque (26) est placé des deux côtés du substrat (36).

10. Pale (20) selon l'une des précédentes revendications, **caractérisée en ce que** l'actionneur de cambrure (26) est placé d'un côté du substrat (36).

11. Pale (20) selon l'une des précédentes revendications, **caractérisée en ce que** le substrat (36) forme un dispositif de réinitialisation pour l'actionneur de cambrure en forme de plaque (26).

12. Pale (20) selon l'une des revendications précédentes, **caractérisée en ce que** au moins la deuxième extrémité de l'actionneur de cambrure en forme de plaque (26), qui forme le volet de pale mobile (24), est enduite d'un premier matériau de remplissage flexible et élastique (32) formant son contour extérieur dans cette zone du profil de pale.

13. Pale (20) selon la revendication 12, **caractérisée en ce que** le premier matériau de remplissage flexible et élastique (32) s'étend jusqu'au corps de base du profil (20a) ou jusqu'au dessus ou en-dessous de sa membrane (30).

14. Pale (20) selon l'une des revendications 12 ou 13, **caractérisée en ce que** le premier matériau de remplissage flexible et élastique (32) est un matériau de remplissage homogène, flexible et élastique (32), plus particulièrement de l'élastomère, du silicone ou de la mousse.

15. Pale (20) selon l'une des revendications 12 ou 13, **caractérisée en ce que** le premier matériau de remplissage flexible et élastique (32) est un matériau de remplissage non homogène, flexible et élastique (32), plus particulièrement un matériau constitué d'éléments de renforcement à nervure, à charpente ou à ossature.

16. Pale (20) selon l'une des revendications 12 à 15, **caractérisée en ce que** le matériau de remplissage flexible et élastique (32) présente un film de protection élastique (33) qui forme le contour extérieur du profil de pale au moins dans la zone du volet de pale (24).

17. Pale (20) selon la revendication 16, **caractérisée en ce que** le film de protection flexible et élastique (33) fait partie intégrante du matériau de remplissage flexible et élastique (32).

18. Pale (20) selon la revendication 16, **caractérisée en ce que** le film de protection flexible et élastique (33) est un film de protection séparé, placé sur le premier matériau de remplissage flexible et élastique (32).

19. Pale (20) selon l'une des précédentes revendications, **caractérisée en ce que** un dispositif de fixation (28, 50) est prévu dans la zone d'extrémité du corps de base du profil (20a) affectée à l'actionneur de cambrure en forme de plaque (26), et que seront fixés sur ce dispositif de fixation
- l'actionneur de cambrure (26) ou
- une zone de bord arrière du profil (23) orientée vers le volet de la pale (24) avec l'actionneur de cambrure
de manière amovible au niveau du profil de la pale.

20. Pale (20) selon la revendication 19, **caractérisée en ce que** le dispositif de fixation (28) présente une structure de profil d'extrémité raccordable à la zone d'extrémité du corps de base du profil (20a) qui est pourvue d'une ouverture d'insertion (52, 54) pour y insérer la première extrémité de l'actionneur de cambrure (26).

21. Pale (20) selon la revendication 19, **caractérisée en ce que** le dispositif de fixation (28, 50) présente une structure de profil d'extrémité raccordable à la zone d'extrémité du corps de base du profil (20a) qui est pourvue d'un élément de fixation en saillie (54, 58) pour y fixer la première extrémité de l'actionneur de cambrure en forme de plaque (26).

22. Pale (20) selon la revendication 21, **caractérisée en ce que** la première extrémité de l'actionneur de cambrure en forme de plaque (26) présente une zone de raccordement qui peut être placée sur l'élément de fixation en saillie (54).

23. Pale (20) selon la revendication 21, **caractérisée en ce que** la première extrémité de l'actionneur de cambrure en plaque (26) est en forme de bande en contact avec l'élément de fixation en saillie (58) et doit être fixée à celui-ci.

24. Pale (20) selon l'une des revendications 21 à 23, **caractérisée en ce que** la structure du profil d'extrémité présente un premier profil en U (38) dont le côté libre est orienté vers la zone avant du profil (21) et dont la branche peut être directement ou indirectement raccordée avec la membrane supérieure et inférieure (30).

25. Pale (20) selon la revendication 24, **caractérisée en ce que** le premier profil en U (38) présente une zone de profil du côté orienté vers le bord arrière (40) qui forme
- l'ouverture d'insertion (52), ou
- l'élément de fixation en saillie (58).

26. Pale (20) selon la revendication 24, **caractérisée en que** au moins un élément de profil (42) est fixé sur le premier profil en U (38) en l'entourant et
- qui peut être raccordé directement ou indirectement à la membrane supérieure et/ou inférieure avec une première zone de profil (43) et
- qui forme avec l'une des deux zones de profil orientée vers le bord arrière (40)
- l'ouverture d'insertion (52), ou
- l'élément de fixation en saillie (54,58).

27. Pale (20) selon la revendication 24 ou 25, **caractérisée en ce que** le premier profil en U (38) présente du côté orienté vers le bord arrière (40) une zone de profil en forme de boucle qui s'étend vers la zone avant du profil (21) et du noyau du profil (22) qui forme un enfoncement vers le bord arrière (40) constituant l'ouverture d'insertion (52) et que la zone de profil en forme de boucle est entourée du côté du noyau du profil (22) par un deuxième profil en U (44) dont le côté libre est orienté vers le bord arrière (40).

28. Pale (20) selon l'une des revendications 24 à 27, **caractérisée en ce que** le premier profil en U (38) est rempli au moins en partie d'un deuxième matériau de remplissage (58) qui présente une rigidité plus importante que celle du matériau du noyau du profil (22).

29. Pale (20) selon l'une des précédentes revendications, **caractérisée en ce que** le dispositif de fixation (28) présente une interface et/ou des raccords, plus particulièrement une interface électrique et/ou des raccords électriques (44), pour une alimentation en énergie et/ou une commande de l'actionneur de cambrure en forme de plaque (26).

30. Engin à ailes rotatives, plus particulièrement un hélicoptère, avec au moins un rotor et au moins une pale (20) selon l'une des précédentes revendications.
